(19) **Europäisches Patentamt**
**European Patent Office**
**Office européen des brevets**

(11) **EP 3 293 690 A1**

(12) **EUROPEAN PATENT APPLICATION**
published in accordance with Art. 153(4) EPC

(43) Date of publication:
**14.03.2018 Bulletin 2018/11**

(51) Int Cl.:
*G06Q 30/02* (2012.01)       *H04W 28/02* (2009.01)

(21) Application number: **16836425.5**

(22) Date of filing: **11.05.2016**

(86) International application number:
**PCT/CN2016/081663**

(87) International publication number:
**WO 2017/028560 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.08.2015 CN 201510514907**

(71) Applicant: **Huawei Technologies Co., Ltd.**
**Longgang District**
**Shenzhen, Guangdong 518129 (CN)**

(72) Inventors:
• XUE, Xiangwei
Shenzhen
Guangdong 518129 (CN)
• CHENG, Dinggui
Shenzhen
Guangdong 518129 (CN)
• GUO, Yinzhou
Shenzhen, Guangdong 518129 (CN)

(74) Representative: **Thun, Clemens**
**Mitscherlich PartmbB**
**Patent- und Rechtsanwälte**
**Sonnenstraße 33**
**80331 München (DE)**

(54) **DATA CALCULATION METHOD AND APPARATUS**

(57)    A data calculation method and apparatus are provided, so as to predict profits brought after network quality is improved, so that an effective network improvement measure is worked out according to a prediction result to maximize profitability. The method includes: determining, by a calculation apparatus, a network quality indicator related to a traffic volume of a target service (101); determining a target value of the network quality indicator (102); calculating a suppressed traffic volume of the target service according to the target value and a preset relational model (103), where the suppressed traffic volume is a traffic volume that is of the target service and that is lost due to a network quality factor, and the relational model is used to indicate a mathematical relationship between the traffic volume and the network quality indicator; calculating costs of increasing the network quality indicator to the target value, and a revenue corresponding to the suppressed traffic volume (104); and calculating profits according to the costs and the revenue (105). A calculation apparatus is further provided, so as to predict profits brought after network quality is improved, so that an effective network improvement measure is worked out according to a prediction result to maximize profitability.

FIG. 1

EP 3 293 690 A1

## Description

This application claims priority to Chinese Patent Application No. 201510514907.4, filed with the Chinese Patent Office on August 20, 2015 and entitled "DATA CALCULATION METHOD AND APPARATUS", which is incorporated herein by reference in its entirety.

## TECHNICAL FIELD

The present invention relates to the computer application field, and in particular, to a data calculation method and apparatus.

## BACKGROUND

With development of electronic technologies, many telecommunication services that are carried out based on a mobile phone, such as a data service, a voice service, and a short message service, emerge in the market. With popularization of mobile phones, a traffic volume of these telecommunication services also keeps increasing. An important subject that an operator needs to face is exploring market potential of each service and calculating return on investment of the market potential.

For a prediction on the return on investment of the market potential, the return on investment is calculated mainly by using traffic volume growth brought by growth in a quantity of terminal users. A prediction on the traffic volume growth brought by the growth in the quantity of terminal users may be obtained by analyzing historical data.

However, in addition to the quantity of terminal users, network quality is also an important factor that affects the traffic volume. For example, a user needs to watch a video; however, a terminal has a quite low network speed, and consequently, it takes an excessively long time period to wait for video buffering, and the user is unwilling to wait for the excessively long time period and stops watching the video. In this case, a network quality problem results in the quite low network speed of the terminal, and therefore changes a user behavior, and finally leads to a significant reduction in traffic consumed by the user and forms a traffic volume suppression phenomenon.

On the contrary, after network quality is improved, a user's requirement is met, and the user who stops watching a video due to a low network speed is not churned. Some users even pursue a service of higher quality, for example, watch a high-definition video. In this case, traffic consumed by a user within a same period of time period significantly increases, and the originally suppressed traffic volume is restored, stimulating growth of a traffic volume.

However, currently, there is no method for analyzing a prediction on profits of traffic volume growth caused by network quality improvement.

## SUMMARY

Embodiments of the present invention provide a data calculation method and apparatus, so as to predict profits brought after network quality is improved, so that an effective network improvement measure is worked out according to a prediction result to maximize profitability.

In view of this, a first aspect of the present invention provides a data calculation method, including:

determining, by a calculation apparatus, a network quality indicator related to a traffic volume of a target service;
determining, by the calculation apparatus, a target value of the network quality indicator;
calculating, by the calculation apparatus, a suppressed traffic volume of the target service according to the target value and a preset relational model, where the suppressed traffic volume is a traffic volume that is of the target service and that is lost due to a network quality factor, and the relational model is used to indicate a mathematical relationship between the traffic volume and the network quality indicator;
calculating, by the calculation apparatus, costs of increasing the network quality indicator to the target value, and a revenue corresponding to the suppressed traffic volume; and
calculating, by the calculation apparatus, profits according to the costs and the revenue.

With reference to the first aspect of the present invention, in a first implementation of the first aspect of the present invention, the determining, by a calculation apparatus, a network quality indicator related to a traffic volume of a target service includes:

performing, by the calculation apparatus, correlation analysis on a network performance indicator related to the traffic volume of the target service, to obtain a network performance indicator closely related to the traffic volume; and
performing, by the calculation apparatus, linear or non-linear combination on the closely related network performance indicator to obtain the network quality indicator.

With reference to the first aspect of the present invention, in a second implementation of the first aspect of the present invention, the calculating, by the calculation apparatus, a suppressed traffic volume of the target service according to the target value and a preset relational model includes:

calculating, by the calculation apparatus, an existing traffic volume of the target service and an existing value of the network quality indicator, where the existing traffic volume is a traffic volume of the target service within a preset time period, and the existing value is a mean value of the network quality indicators within the preset time period;
determining, by the calculation apparatus, a first traffic volume that is of the target service and that is corresponding to the target value of the network quality indicator in the preset relational model, and a second traffic volume that is of the target service and that is corresponding to the existing value of the network quality indicator;
calculating, by the calculation apparatus, a suppression to release ratio according to the first traffic volume and the second traffic volume;
and
multiplying, by the calculation apparatus, the suppression to release ratio by the existing traffic volume to obtain the suppressed traffic volume.

With reference to the second implementation of the first aspect of the present invention, in a third implementation of the first aspect of the present invention, the calculating, by the calculation apparatus, a suppression to release ratio according to the first traffic volume and the second traffic volume includes:

calculating, by the calculation apparatus, the suppression to release ratio $a$ by using the following formula:

$$a = \frac{y_{t\arg et} - y_i}{y_i} \times 100\% \quad ;$$

where $y_{target}$ is the first traffic volume and $y_i$ is the second traffic volume.

With reference to the first aspect of the present invention, in a fourth implementation of the first aspect of the present invention, before the calculating, by the calculation apparatus, a suppressed traffic volume of the target service according to the target value and a preset relational model, the method includes:

establishing, by the calculation apparatus, the relational model.

With reference to the fourth implementation of the first aspect of the present invention, in a fifth implementation of the first aspect of the present invention, the establishing, by the calculation apparatus, the relational model includes:

obtaining, by the calculation apparatus, a preset quantity of communication records of the target service, where each communication record includes a value of the network quality indicator of current communication and a traffic volume generated in the current communication; and
performing, by the calculation apparatus, regression fitting on a traffic volume generated in each communication in the communication records and a value of a corresponding network quality indicator, to obtain the relational model between the network quality indicator and the traffic volume.

With reference to any one of the first aspect to the fifth implementation of the first aspect of the present invention, in a sixth implementation of the first aspect of the present invention, the determining, by the calculation apparatus, a target value of the network quality indicator includes:

determining, by the calculation apparatus according to the communication records of the target service, a resource utilization rate corresponding to each value of the network quality indicator, where the resource utilization rate is a traffic volume that is of the target service and that is generated per unit resource;
determining, by the calculation apparatus, a maximum value of the resource utilization rates; and
using, by the calculation apparatus, a value of a network quality indicator corresponding to the maximum resource utilization rate as the target value of the network quality indicator.

With reference to any one of the first aspect of the present invention to the fifth implementation of the first aspect of the present invention, in a seventh implementation of the first aspect of the present invention, the determining, by the calculation apparatus, a target value of the network quality indicator includes:

receiving, by the calculation apparatus, a user-input target value of the network quality indicator.

A second aspect of the present invention provides a calculation apparatus, including:

a first determining module, configured to determine a network quality indicator related to a traffic volume of a target service;
a second determining module, configured to determine a target value of the network quality indicator determined by the first determining module;
a first calculation module, configured to calculate a suppressed traffic volume of the target service according to the target value and a preset relational model, where the suppressed traffic volume is a traffic volume that is of the target service and that is lost due to a network quality factor, and the relational model is used to indicate a mathematical relationship between the traffic volume and the network quality indicator;
a second calculation module, configured to calculate costs of increasing the network quality indicator to the target value determined by the second determining module, and a revenue corresponding to the suppressed traffic volume obtained by the first calculation module; and
a third calculation module, configured to calculate profits according to the costs and the revenue.

With reference to the second aspect of the present invention, in a first implementation of the second aspect of the present invention,

the first determining module is further configured to perform correlation analysis on a network performance indicator related to the traffic volume of the target service, to obtain a network performance indicator closely related to the traffic volume; and
the first determining module is further configured to perform linear or non-linear combination on the closely related network performance indicator to obtain the network quality indicator.

With reference to the second aspect of the present invention, in a second implementation of the second aspect of the present invention,

a second calculation module, configured to calculate costs of increasing the network quality indicator to the target value determined by the second determining module, and a revenue corresponding to the suppressed traffic volume obtained by the first calculation module; and
a third calculation module, configured to calculate profits according to the costs and the revenue.

With reference to the second aspect of the present invention, in a first implementation of the second aspect of the present invention,

the first determining module is further configured to perform correlation analysis on a network performance indicator related to the traffic volume of the target service, to obtain a network performance indicator closely related to the traffic volume; and
the first determining module is further configured to perform linear or non-linear combination on the closely related network performance indicator to obtain the network quality indicator.

With reference to the second aspect of the present invention, in a second implementation of the second aspect of the present invention,

the first calculation module is further configured to calculate an existing traffic volume of the target service and an existing value of the network quality indicator, where the existing traffic volume is a traffic volume of the target service within a preset time period, and the existing value is a mean value of the network quality indicators within the preset time period;
the first calculation module is further configured to determine a first traffic volume that is of the target service and that is corresponding to the target value of the network quality indicator in the preset relational model, and a second traffic volume that is of the target service and that is corresponding to the existing value of the network quality indicator;
the first calculation module is further configured to calculate a suppression to release ratio according to the first traffic volume and the second traffic volume; and
the first calculation module is further configured to multiply the suppression to release ratio by the existing traffic volume to obtain the suppressed traffic volume.

With reference to the second aspect of the present invention, in a third implementation of the second aspect of the present invention, the calculation apparatus further includes:

an establishment module, configured to establish the relational model.

With reference to the third implementation of the second aspect of the present invention, in a fourth implementation of the second aspect of the present invention,

the establishment module is further configured to obtain a preset quantity of communication records of the target service, where each communication record includes a value of the network quality indicator of current communication and a traffic volume generated in the current communication; and
the establishment module is further configured to perform regression fitting on a traffic volume generated in each communication in the communication records and a value of a corresponding network quality indicator, to obtain the relational model between the network quality indicator and the traffic volume.

With reference to any one of the second aspect of the present invention to the fourth implementation of the second aspect of the present invention, in a fifth implementation of the second aspect of the present invention,

the second determining module is further configured to determine, according to the communication records of the target service, a resource utilization rate corresponding to each value of the network quality indicator, where the resource utilization rate is a traffic volume that is of the target service and that is generated per unit resource;
the second determining module is further configured to determine a maximum value of the resource utilization rates; and
the second determining module is further configured to use a value of a network quality indicator corresponding to the maximum resource utilization rate as the target value of the network quality indicator.

With reference to any one of the second aspect of the present invention to the fourth implementation of the second aspect of the present invention, in a sixth implementation of the second aspect of the present invention,

the second determining module is further configured to receive a user-input target value of the network quality indicator.

It can be learned from the foregoing technical solutions that the embodiments of the present invention have the following advantages:

In the embodiments of the present invention, the calculation apparatus can determine the network quality indicator closely related to the traffic volume of the target service, and then determine the target value of the network quality indicator and calculate the suppressed traffic volume of the target service according to the target value and the preset relational model, and then calculate the costs of increasing the network quality indicator to the target value, and the revenue corresponding to the suppressed traffic volume, and calculate the profits according to the investment costs and the revenue. After the network quality indicator is increased to the target value, the suppressed traffic volume can be released, that is, the traffic volume increases correspondingly. The revenue corresponding to the suppressed traffic volume is a revenue obtained after the network quality indicator is improved. The costs of increasing the network quality indicator to the target value are costs of improving network quality. Therefore, profits brought after network quality is improved can be predicted by using this solution, so that an effective network improvement measure is worked out according to a prediction result to maximize profitability.

**BRIEF DESCRIPTION OF DRAWINGS**

FIG. 1 is a schematic diagram of an embodiment of a data calculation method according to an embodiment of the present invention;
FIG. 2 is a schematic diagram of an embodiment of a calculation apparatus according to an embodiment of the present invention;
FIG. 3 is a schematic diagram of another embodiment of a calculation apparatus according to an embodiment of the present invention;
FIG. 4 is a schematic diagram of a relational model between a network quality indicator and a traffic volume; and
FIG. 5 is a schematic diagram of a relational model between a user speed and a resource utilization rate.

## DESCRIPTION OF EMBODIMENTS

Embodiments of the present invention provide a data calculation method, so as to work out an effective network quality improvement measure to maximize profitability.

101. A calculation apparatus determines a network quality indicator related to a traffic volume of a target service.
In this embodiment of the present invention, the calculation apparatus determines the network quality indicator related to the traffic volume of the target service. It should be noted that the target service may be a data service, may be a voice service, may be a short message service, or may be another telecommunication service. Details are not limited herein.
102. The calculation apparatus determines a target value of the network quality indicator.
After determining the network quality indicator, the calculation apparatus determines the target value of the network quality indicator.
103. The calculation apparatus calculates a suppressed traffic volume of the target service according to the target value and a preset relational model.
The calculation apparatus calculates the suppressed traffic volume of the target service according to the target value and the preset relational model. The suppressed traffic volume is a traffic volume that is of the target service and that is lost due to a network quality factor, and the preset relational model is used to indicate a mathematical relationship between the traffic volume and the network quality indicator.
104. The calculation apparatus calculates costs of increasing the network quality indicator to the target value, and a revenue corresponding to the suppressed traffic volume.
After calculating the suppressed traffic volume, the calculation apparatus calculates the costs that need to be spent in increasing the network quality indicator to the target value, and the revenue corresponding to the suppressed traffic volume, that is, a revenue that is brought after the suppressed traffic volume is restored. Specifically, the costs that need to be spent in increasing the network quality indicator to the target value may be calculated in the following manner: performing root cause analysis on a cause of traffic volume suppression, to obtain a quantized weight of each type of root cause; and then multiplying the weight of each type of root cause by the suppressed traffic volume that is calculated in step 103, that is, a traffic volume that is of the traffic volume suppressed by various root cause problems and that needs to be released for the calculated various root cause problems; proposing a corresponding solution according to the traffic volume that needs to be released; and then comprehensively calculating costs that need to be invested to implement various measures, that is, the costs of increasing the network quality indicator to the target value. The revenue corresponding to the suppressed traffic volume calculated in step 103 is a revenue that can be brought after the various root cause problems are resolved, the quality indicator is increased to the target value, and the suppressed traffic volume is restored.
105. The calculation apparatus calculates profits according to the costs and the revenue.

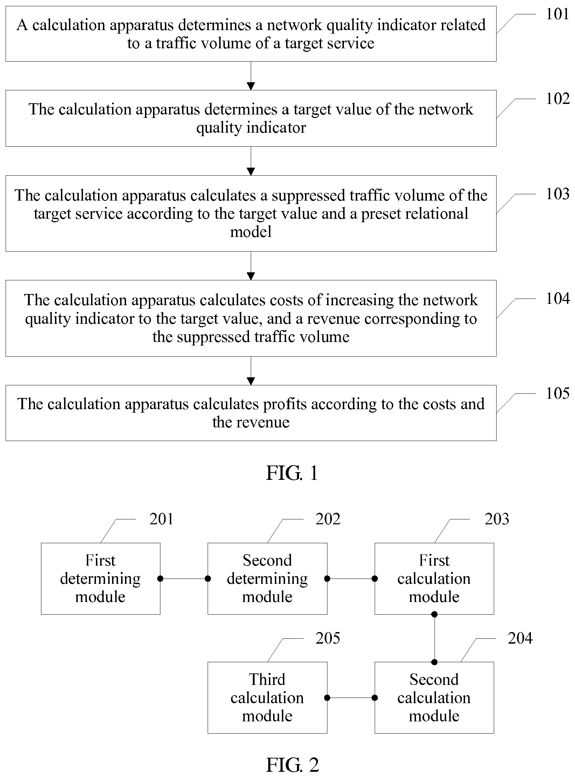

After calculating the costs and the revenue, the calculation apparatus calculates the profits according to the costs and the revenue. Specifically, the profits are obtained by subtracting the costs from the revenue calculated in step 104.
In this embodiment of the present invention, the calculation apparatus can determine the network quality indicator closely related to the traffic volume of the target service, and then determine the target value of the network quality indicator and calculate the suppressed traffic volume of the target service according to the target value and the preset relational model, and then calculate the costs of increasing the network quality indicator to the target value, and the revenue corresponding to the suppressed traffic volume, and calculate the profits according to the costs and the revenue. After the network quality indicator is increased to the target value, the suppressed traffic volume can be released, that is, the traffic volume increases correspondingly. The revenue corresponding to the suppressed traffic volume is a revenue obtained after the network quality indicator is improved. The costs of increasing the network quality indicator to the target value are costs of improving network quality. Therefore, profits brought after network quality is improved can be predicted by using this solution, so that an effective network improvement measure is worked out according to a prediction result to maximize profitability.
For ease of understanding, the following describes in detail the data calculation method according to this embodiment of the present invention. Further referring to FIG. 1, in this embodiment of the present invention, the calculation apparatus determines, in the following manner, the network quality indicator related to the traffic volume of the target service:

performing correlation analysis on the network performance indicator related to the traffic volume of the target service, to obtain a network performance indicator closely related to the traffic volume; and then performing linear or non-linear combination on the closely related network performance indicator to obtain the network quality indicator.

Specifically, the calculation apparatus obtains several communication records of the target service. Each communication record includes a value of the network performance indicator of current communication and a traffic volume corresponding to the current communication. The calculation apparatus uses a value of a network performance indicator and a traffic volume of each communication as one set of data, that is, each communication record corresponds to one set of data. The calculation apparatus performs discrete processing on obtained several sets of data, and then calculates a mutual information entropy between each network performance indicator and each traffic volume by using the following formula:

$$I(X;Y) = \sum_{x \in X}\sum_{y \in Y} p(x,y)\log\left(\frac{p(x,y)}{p(x)p(y)}\right);$$

where X is a network performance indicator and Y is a traffic volume.

Then, the network performance indicator closely related to the traffic volume is determined according to the mutual information entropy. Specifically, three largest mutual information entropies may be used as the network performance indicators closely related to the traffic volume, or a mutual information entropy that is greater than a preset value may be used as the network performance indicator closely related to the traffic volume, or the network performance indicator closely related to the traffic volume may be selected in another manner. Details are not limited herein. It should be noted that the network performance indicator is used to reflect network performance, for example, a congestion rate, a weak coverage percentage, or an interference percentage, of the target service.

After determining the network performance indicators closely related to the traffic volume, the calculation apparatus determines whether these network performance indicators closely related to the traffic volume are correlated. If these network performance indicators closely related to the traffic volume are correlated, the calculation apparatus performs non-linear combination on these closely related network performance indicators to obtain the network quality indicator. If these network performance indicators closely related to the traffic volume are not correlated, the calculation apparatus performs linear combination on these closely related indicators to obtain the network quality indicator.

It should be noted that the calculation apparatus may also select a network performance indicator that is most closely related to the traffic volume as the network performance indicator closely related to the traffic volume, and directly use this closely related network performance indicator as the network indicator quality indicator. The network quality indicator may be one network performance indicator or may be a comprehensive representation of multiple network performance indicators. Details are not limited herein.

In this embodiment of the present invention, the calculation apparatus may determine the target value of the network quality indicator in the following manner:

I. Determine the target value according to a historical communication record.

1. The calculation apparatus determines, according to the communication records of the target service, a resource utilization rate corresponding to each value of the network quality indicator.
Specifically, the calculation apparatus obtains a preset quantity of communication records, where each communication record includes a value of the network quality indicator of current communication, a quantity of resources occupied in the current communication, and a traffic volume generated in the current communication; and uses, as a resource utilization rate of the current communication, a ratio of the traffic volume generated in the current communication to the quantity of resources occupied in the current communication. Fitting is performed on the value that is of the network quality indicator and that is included in each communication record in the preset quantity of communication records, and the corresponding resource utilization rate, to obtain the relational model between the network quality indicator of the network quality indicator and the resource utilization rate. The relational model includes the resource utilization rate corresponding to each value of the network quality indicator. It should be noted that, generally, a resource occupied in communication means a physical channel used for communication for the target service.
2. The calculation apparatus determines a maximum value of the resource utilization rates.

3. The calculation apparatus uses a value of a network quality indicator corresponding to the maximum resource utilization rate as the target value of the network quality indicator.

II. A user defines the target value.

1. The calculation apparatus receives a user-input target value of the network quality indicator.

It can be understood that the calculation apparatus performs setting based on user experience, a group threshold baseline, historical network data analysis, and the like, or may determine the target value of the network quality indicator in another manner. Details are not limited herein.

In this embodiment of the present invention, the calculation apparatus may calculate the suppressed traffic volume of the target service according to the target value and the preset relational model in the following manner:

The calculation apparatus calculates an existing traffic volume of the target service and an existing value of the network quality indicator; determines a first traffic volume that is of the target service and that is corresponding to the target value of the network quality indicator in the preset relational model, and a second traffic volume that is of the target service and that is corresponding to the existing value of the network quality indicator; calculates a suppression to release ratio according to the first traffic volume and the second traffic volume; and multiplies the suppression to release ratio by the existing traffic volume to obtain the suppressed traffic volume.

It should be noted that the existing traffic volume is a traffic volume of the target service within a preset time period, and the existing value is a mean value of the network quality indicators within the preset time period.

Specifically, the calculation apparatus obtains several communication records from historical network data within a preset time period, where each communication record includes a value of the network performance indicator of current communication and a traffic volume generated in the current communication. Then, a network performance indicator closely related to the traffic volume is selected from the network performance indicator of each communication record; the value of the network quality indicator corresponding to the current communication is calculated based on the value of the closely related network performance indicator in a linear or non-linear manner; and then a mean value, that is, the existing value, of the network quality indicators of the several communication records within the preset time period is calculated. A total traffic volume generated in the several communication records within the preset time period is the existing traffic volume. It can be understood that, if the network quality indicator is directly represented by a network performance indicator, the calculation apparatus may directly calculate a mean value of the network performance indicators of the several communication records within the preset time period as the mean value of the network quality indicators.

After calculating the existing traffic value and the existing value, the calculation apparatus finds, from the preset relational model, the first traffic volume corresponding to the target value and the second traffic volume corresponding to the existing value, and calculates the suppression to release ratio $a$ according to the first traffic volume and the second traffic volume by using the following formula:

$$a = \frac{y_{target} - y_i}{y_i} \times 100\% \ ;$$

where $y_{target}$ is the first traffic volume and $y_i$ is the second traffic volume.

Then, the obtained suppression to release ratio is multiplied by the existing traffic volume to obtain the suppressed traffic volume.

It should be further noted that the preset relational model in this embodiment of the present invention may be established by the calculation apparatus in the following manner:

The calculation apparatus obtains a preset quantity of communication records of the target service. Each communication record includes a value of the network quality indicator of current communication and a traffic volume generated in the current communication. The calculation apparatus performs regression fitting on a traffic volume generated in each communication in the preset quantity of communication records and a value of a network quality indicator, to obtain the relational model between the network quality indicator and the traffic volume.

It can be understood that if the network quality indicator is represented by a network performance indicator closely related to a traffic volume, the calculation apparatus may obtain a value of the network performance indicator directly from the communication records as the value of the network quality indicator. If the network performance indicator is represented by multiple network performance indicators closely related to a traffic volume, the calculation apparatus selects values of these network performance indicators closely related to the traffic volume from each communication record, and performs linear or non-linear combination to obtain a value of a network quality indicator corresponding to the current communication.

The calculation apparatus may further obtain the preset relational model in another manner. Details are not limited herein.

This embodiment of the present invention provides a specific manner of determining a network quality indicator and calculating a suppressed traffic volume, and therefore, implementability of a solution is improved.

Further, in this embodiment of the present invention, the calculation apparatus may determine the target value of the network quality indicator in multiple manners, and therefore, flexibility of the solution is improved.

For ease of understanding, the following describes, by using an actual application scenario, the data calculation method according to this embodiment of the present invention:

The calculation apparatus performs correlation analysis to obtain a user speed indicator that has a largest correlation with a data traffic volume (traffic). A correlation corresponding to another indicator is quite low, and therefore, the user speed indicator is used as a network quality indicator.

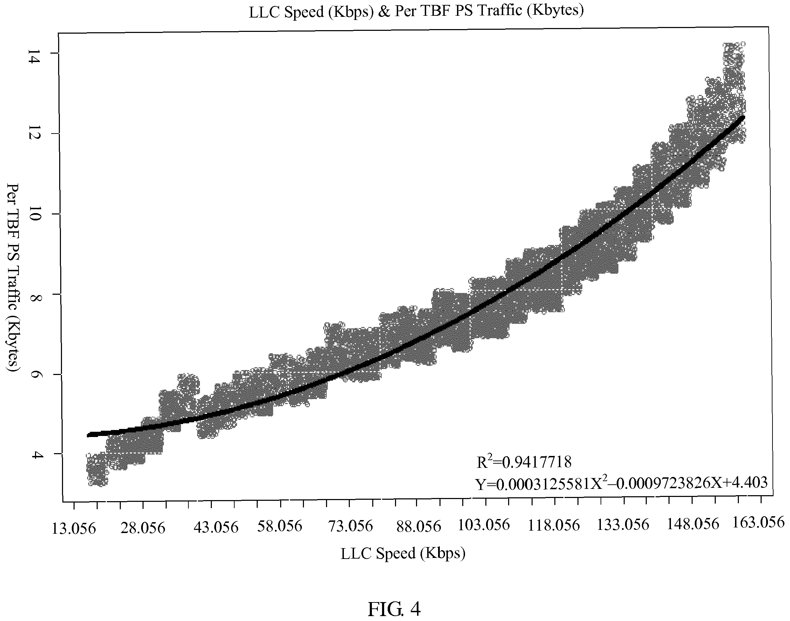

The calculation apparatus obtains 200 communication records of a data service. Each communication record includes one set of data, and each set of data includes a user speed of current communication and traffic generated in the current communication. After one-dimension regression fitting analysis is performed on the 200 sets of data, it is obtained that a secondary relationship exists between the user speed and the traffic within a range from 0 to 160 Kbps. FIG. 4 shows a specific function expression (that is, the relational model between a network quality indicator and a traffic volume) between the user speed and the traffic. A horizontal coordinate is the user speed in unit of Kbps, and a vertical coordinate is traffic generated in each call in unit of Kbytes.

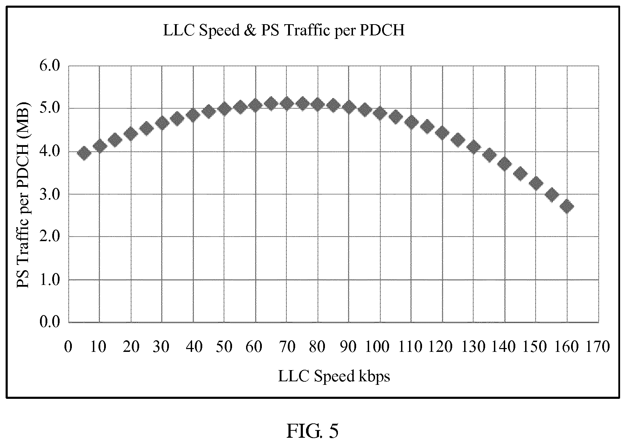

The calculation apparatus obtains 200 communication records of a data service. Each communication record includes one set of data, and each set of data includes a user speed of current communication, a quantity of packet data channels (Packet Data Channel, PDCH) occupied in the current communication, and traffic generated in the current communication. The PDCH is a physical channel used by a packet switched service. A ratio of traffic to the quantity of PDCHs in each set of data is used as a resource utilization rate of this set of data. Data fitting is performed on the user speed and the resource utilization rate of the 200 sets of data to obtain the relational model between a user speed and a resource utilization rate shown in FIG. 5. A horizontal coordinate is the user speed in unit of Kbps, and traffic (that is, the resource utilization rate) generated in each PDCH is in unit of MB. It can be seen from FIG. 5 that, when the user speed is 80 Kbps, traffic generated in each PDCH is maximum, that is, a resource utilization rate is maximum. The calculation apparatus uses 80 Kbps as a target value of the user speed, that is, the target value of the network quality indicator is 80 Kbps.

After the calculation apparatus obtains the target value of the user speed and the specific function expression between a user speed and traffic, the calculation apparatus obtains, by means of calculation, that traffic of a cell A within a busy hour is 157.64 MB (the existing traffic volume), and an average user speed within a busy hour is 60 Kbps (the existing value). According to the relational model shown in FIG. 4, when the user speed is 80 Kbps, traffic generated in each call is 6.2 Kbytes (the first traffic volume), and when the user speed is 60 Kbps, traffic generated in each call is 5.5 Kbytes (the second traffic volume). The calculation apparatus obtains a suppression to release ratio of a data service by means of calculation:

$$a = \frac{y_{t\arg et} - y_i}{y_i} \times 100\% = \frac{6.2 - 5.5}{5.5} \times 100\% = 12.7\%$$

.

Then, the suppression to release ratio is multiplied by the existing traffic volume to obtain traffic (a suppressed traffic volume) suppressed within a busy hour of the cell A:

$$12.7\% \times 157..64 MB = 20.02 MB$$

.

Similar to the foregoing calculation process, suppressed traffic volumes of all cells within a research area are sequentially calculated and summed up to obtain that traffic (a suppressed traffic volume) suppressed within a busy hour of the research area is 20915.08 MB. After the calculation apparatus calculates the suppressed traffic volume, root cause analysis is performed on a cause of traffic volume suppression. According to the analysis, it is obtained that main root causes of a low user speed include a parameter, a resource, coverage, interference, a quantized weight of each type of root cause, and suppressed traffic that can be restored after the various root cause problems are resolved, that is, a traffic gain that can be brought, as shown in the following Table 1.

**Table 1**

|  | Parameter | Resource | Coverage | Interference | Total volume |
|---|---|---|---|---|---|
| Quantized weight of a root cause | 12.9% | 31.8 % | 41.6 % | 13.7% | 100% |
| Traffic gain (MB) | 2691.6 1 | 6654 .38 | 8707. 67 | 2861.95 | 20915 .08 |

To increase a user speed, the following is a measure for increasing the user speed (the network quality indicator) to 80 Kbps (the target value) in this research area according to the foregoing main root causes of a low speed and traffic gains corresponding to all root causes:

Parameter optimization: Mainly a Default MCS Type parameter is optimized, and a default encoding mode is adjusted from MCS1 to MCS5;
Carrier expansion: A total of 325 pieces of TRX are added;
New sites: A total of 241 new sites are planned.

Based on the foregoing solution, costs that need to be invested are calculated. Specifically, costs that need be invested for each piece of TRX are 6000 RMB, and costs of the carrier expansion are $6000 \times 325 RMB = 1950000 RMB$; and costs of each new site are 30000 RMB, and costs of the new sites are $30000 \times 241 RMB = 7230000 RMB$. Therefore, costs that need to be invested to increase the user speed (the network quality indicator) to 80 Kbps (the target value) are $1950000 + 7230000 RMB = 9180000 RMB$.

A revenue corresponding to the suppressed traffic (the suppressed traffic volume) is calculated. In the foregoing, the suppressed traffic within a busy hour has been calculated and is 20915.08 MB. That is, after the user speed (the network quality indicator) is increased to 80 Kbps (the target value), a traffic gain that can be brought in each busy hour is 20915.08 MB. For ease of analysis, the traffic gain that can be brought in each busy hour is converted into a traffic gain that can be brought in each year. Specifically, based on empirical analysis, a coefficient used for converting a busy hour into a day is 10, and therefore, an annual traffic gain in this research area is:

$$20915.08 \times 10 \times 365 / 1024 GB = 74550.82 GB$$

When a factor such as a traffic package is not considered, a traffic fee is 0.3 RMB/MB, and therefore, an annual revenue corresponding to the suppressed traffic (the suppressed traffic volume) is:

$$74550.82 GB \times 1024 MB / GB \times 0.3 RMB / MB = 22902001.65 RMB$$

The annual profits in this research area are obtained by subtracting costs from the foregoing calculated revenue:

$$22902001.65 - 9180000 RMB = 13722001.65 RMB$$

Table 2 shows a specific result.

**Table 2**

|  | Parameter optimization | TRX expansion | New site | Total volume |
|---|---|---|---|---|
| Traffic gain (GB/Year) | 9594.12 | 23719.23 | 41237.44 | 74550.82 |
| Revenue (RMB/Year) | 2947312.95 | 7286546.10 | 23668142.6 | 22902001.6 5 |
| Costs (RMB) | 0 | 1950000 | 7230000 | 9180000 |

(continued)

|  | Parameter optimization | TRX expansion | New site | Total volume |
|---|---|---|---|---|
| Profits | 2947312.95 | 5336546.10 | 5438142.60 | 13722001.6 5 |

The foregoing describes a data calculation method according to the embodiments of the present invention, and the following describes a calculation apparatus according to the embodiments of the present invention. Referring to FIG. 2, an embodiment of a calculation apparatus according to an embodiment of the present invention includes:

a first determining module 201, configured to determine a network quality indicator related to a traffic volume of a target service;

a second determining module 202, configured to determine a target value of the network quality indicator determined by the first determining module 201;

a first calculation module 203, configured to calculate a suppressed traffic volume of the target service according to the target value and a preset relational model, where the suppressed traffic volume is a traffic volume that is of the target service and that is lost due to a network quality factor, and the relational model is used to indicate a mathematical relationship between the traffic volume and the network quality indicator;

a second calculation module 204, configured to calculate costs of increasing the network quality indicator to the target value determined by the second determining module 203, and a revenue corresponding to the suppressed traffic volume obtained by the first calculation module 203;

and

a third calculation module 205, configured to calculate profits according to the costs and the revenue.

In this embodiment of the present invention, the first determining module 201 can determine the network quality indicator closely related to the traffic volume of the target service; the second determining module 202 determines the target value of the network quality indicator; the first calculation module 203 calculates the suppressed traffic volume of the target service according to the target value and the preset relational model; the second calculation module 204 calculates the costs of increasing the network quality indicator to the target value, and the revenue corresponding to the suppressed traffic volume; and the third calculation module 205 calculates the profits according to the costs and the revenue. After the network quality indicator is increased to the target value, the suppressed traffic volume can be released, that is, the traffic volume increases correspondingly. The revenue corresponding to the suppressed traffic volume is a revenue obtained after the network quality indicator is improved. The costs of increasing the network quality indicator to the target value are costs of improving network quality. Therefore, profits brought after network quality is improved can be predicted by using this solution, so that an effective network improvement measure is worked out according to a prediction result to maximize profitability.

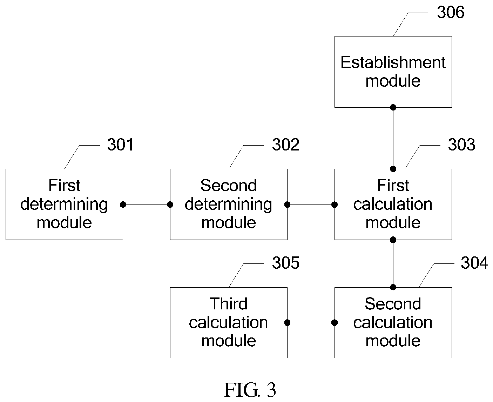

For ease of understanding, the following describes in detail the calculation apparatus according to an embodiment of the present invention. Referring to FIG. 3, another embodiment of a calculation apparatus according to an embodiment of the present invention includes:

a first determining module 301, configured to determine a network quality indicator related to a traffic volume of a target service;

a second determining module 302, configured to determine a target value of the network quality indicator determined by the first determining module 301;

a first calculation module 303, configured to calculate a suppressed traffic volume of the target service according to the target value and a preset relational model, where the suppressed traffic volume is a traffic volume that is of the target service and that is lost due to a network quality factor, and the relational model is used to indicate a mathematical relationship between the traffic volume and the network quality indicator;

a second calculation module 304, configured to calculate costs of increasing the network quality indicator to the target value determined by the second determining module 303, and a revenue corresponding to the suppressed traffic volume obtained by the first calculation module 303;

a third calculation module 305, configured to calculate profits according to the costs and the revenue; and

an establishment module 306, configured to establish the relational model.

Optionally, in some other embodiments of the embodiments of the present invention, the first determining module 301 is further configured to: perform correlation analysis on a network performance indicator related to the traffic volume of the target service, to obtain a network performance indicator closely related to the traffic volume; and perform linear or non-linear combination on the closely related network performance indicator to obtain the network quality indicator.

Optionally, in some other embodiments of the embodiments of the present invention, the first calculation module 303 is further configured to: calculate an existing traffic volume of the target service and an existing value of the network quality indicator; determine a first traffic volume corresponding to the target value of the network quality indicator in the relational model, and a second traffic volume corresponding to the existing value of the network quality indicator; calculate a suppression to release ratio according to the first traffic volume and the second traffic volume; and multiply the suppression to release ratio by the existing traffic volume to obtain the suppressed traffic volume. The existing traffic volume is a traffic volume of the target service within a preset time period, and the existing value is a mean value of the network quality indicators within the preset time period.

Optionally, in some other embodiments of the embodiments of the present invention, the establishment module 306 is further configured to: obtain a preset quantity of communication records of the target service, where each communication record includes a value of the network quality indicator of current communication and a traffic volume generated in the current communication; and perform regression fitting on a traffic volume generated in each communication in the preset quantity of communication records and a value of a corresponding network quality indicator, to obtain the relational model between the network quality indicator and the traffic volume.

Optionally, in some other embodiments of the embodiments of the present invention, the second determining module 302 is further configured to: determine, according to the communication records of the target service, a resource utilization rate corresponding to each value of the network quality indicator; determine a maximum value of the resource utilization rates; and use a value of a network quality indicator corresponding to the maximum resource utilization rate as the target value of the network quality indicator. The resource utilization rate is a traffic volume that is of the target service and that is generated per unit resource.

Optionally, in some other embodiments of the embodiments of the present invention, the second determining module 302 is further configured to receive a user-input target value of the network quality indicator.

It may be clearly understood by persons skilled in the art that, for ease and brevity of description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A data calculation method, comprising:

   determining, by a calculation apparatus, a network quality indicator related to a traffic volume of a target service;
   determining, by the calculation apparatus, a target value of the network quality indicator;
   calculating, by the calculation apparatus, a suppressed traffic volume of the target service according to the target value and a preset relational model, wherein the suppressed traffic volume is a traffic volume that is of the target service and that is lost due to a network quality factor, and the relational model is used to indicate a mathematical relationship between the traffic volume and the network quality indicator;
   calculating, by the calculation apparatus, costs of increasing the network quality indicator to the target value, and a revenue corresponding to the suppressed traffic volume; and
   calculating, by the calculation apparatus, profits according to the costs and the revenue.

2. The method according to claim 1, wherein the determining, by a calculation apparatus, a network quality indicator related to a traffic volume of a target service comprises:

   performing, by the calculation apparatus, correlation analysis on a network performance indicator related to the traffic volume of the target service, to obtain a network performance indicator closely related to the traffic volume; and
   performing, by the calculation apparatus, linear or non-linear combination on the closely related network performance indicator to obtain the network quality indicator.

3. The method according to claim 1, wherein the calculating, by the calculation apparatus, a suppressed traffic volume of the target service according to the target value and a preset relational model comprises:

   calculating, by the calculation apparatus, an existing traffic volume of the target service and an existing value of the network quality indicator, wherein the existing traffic volume is a traffic volume of the target service within a preset time period, and the existing value is a mean value of the network quality indicators within the preset time period;
   determining, by the calculation apparatus, a first traffic volume that is of the target service and that is corresponding to the target value of the network quality indicator in the preset relational model, and a second traffic volume that is of the target service and that is corresponding to the existing value of the network quality indicator;
   calculating, by the calculation apparatus, a suppression to release ratio according to the first traffic volume and the second traffic volume; and
   multiplying, by the calculation apparatus, the suppression to release ratio by the existing traffic volume to obtain the suppressed traffic volume.

4. The method according to claim 3, wherein the calculating, by the calculation apparatus, a suppression to release ratio according to the first traffic volume and the second traffic volume comprises:

   calculating, by the calculation apparatus, the suppression to release ratio *a* by using the following formula:

   $$a = \frac{y_{t\arg et} - y_i}{y_i} \times 100\%$$ ;

   wherein $y_{target}$ is the first traffic volume and $y_i$ is the second traffic volume.

5. The method according to claim 1, before the calculating, by the calculation apparatus, a suppressed traffic volume of the target service according to the target value and a preset relational model, comprising:

   establishing, by the calculation apparatus, the relational model.

6. The method according to claim 5, wherein the establishing, by the calculation apparatus, the relational model comprises:

obtaining, by the calculation apparatus, a preset quantity of communication records of the target service, wherein each communication record comprises a value of the network quality indicator of current communication and a traffic volume generated in the current communication; and

performing, by the calculation apparatus, regression fitting on a traffic volume generated in each communication in the communication records and a value of a corresponding network quality indicator, to obtain the relational model between the network quality indicator and the traffic volume.

7.  The method according to any one of claims 1 to 6, wherein the determining, by the calculation apparatus, a target value of the network quality indicator comprises:

determining, by the calculation apparatus according to the communication records of the target service, a resource utilization rate corresponding to each value of the network quality indicator, wherein the resource utilization rate is a traffic volume that is of the target service and that is generated per unit resource;

determining, by the calculation apparatus, a maximum value of the resource utilization rates; and

using, by the calculation apparatus, a value of a network quality indicator corresponding to the maximum resource utilization rate as the target value of the network quality indicator.

8.  The method according to any one of claims 1 to 6, wherein the determining, by the calculation apparatus, a target value of the network quality indicator comprises:

receiving, by the calculation apparatus, a user-input target value of the network quality indicator.

9.  A calculation apparatus, comprising:

a first determining module, configured to determine a network quality indicator related to a traffic volume of a target service;

a second determining module, configured to determine a target value of the network quality indicator determined by the first determining module;

a first calculation module, configured to calculate a suppressed traffic volume of the target service according to the target value and a preset relational model, wherein the suppressed traffic volume is a traffic volume that is of the target service and that is lost due to a network quality factor, and the relational model is used to indicate a mathematical relationship between the traffic volume and the network quality indicator;

a second calculation module, configured to calculate costs of increasing the network quality indicator to the target value determined by the second determining module, and a revenue corresponding to the suppressed traffic volume obtained by the first calculation module; and

a third calculation module, configured to calculate profits according to the costs and the revenue.

10.  The calculation apparatus according to claim 9, wherein:

the first determining module is further configured to perform correlation analysis on a network performance indicator related to the traffic volume of the target service, to obtain a network performance indicator closely related to the traffic volume; and

the first determining module is further configured to perform linear or non-linear combination on the closely related network performance indicator to obtain the network quality indicator.

11.  The calculation apparatus according to claim 9, wherein:

the first calculation module is further configured to calculate an existing traffic volume of the target service and an existing value of the network quality indicator, wherein the existing traffic volume is a traffic volume of the target service within a preset time period, and the existing value is a mean value of the network quality indicators within the preset time period;

the first calculation module is further configured to determine a first traffic volume that is of the target service and that is corresponding to the target value of the network quality indicator in the preset relational model, and a second traffic volume that is of the target service and that is corresponding to the existing value of the network quality indicator;

the first calculation module is further configured to calculate a suppression to release ratio according to the first traffic volume and the second traffic volume; and

the first calculation module is further configured to multiply the suppression to release ratio by the existing traffic volume to obtain the suppressed traffic volume.

12. The calculation apparatus according to claim 9, wherein the calculation apparatus further comprises:

an establishment module, configured to establish the relational model.

13. The calculation apparatus according to claim 12, wherein:

the establishment module is further configured to obtain a preset quantity of communication records of the target service, wherein each communication record comprises a value of the network quality indicator of current communication and a traffic volume generated in the current communication; and
the establishment module is further configured to perform regression fitting on a traffic volume generated in each communication in the communication records and a value of a corresponding network quality indicator, to obtain the relational model between the network quality indicator and the traffic volume.

14. The calculation apparatus according to any one of claims 9 to 13, wherein:

the second determining module is further configured to determine, according to the communication records of the target service, a resource utilization rate corresponding to each value of the network quality indicator, wherein the resource utilization rate is a traffic volume that is of the target service and that is generated per unit resource;
the second determining module is further configured to determine a maximum value of the resource utilization rates; and
the second determining module is further configured to use a value of a network quality indicator corresponding to the maximum resource utilization rate as the target value of the network quality indicator.

15. The calculation apparatus according to any one of claims 9 to 13, wherein:

the second determining module is further configured to receive a user-input target value of the network quality indicator.

| | |
|---|---|
| A calculation apparatus determines a network quality indicator related to a traffic volume of a target service | 101 |
| The calculation apparatus determines a target value of the network quality indicator | 102 |
| The calculation apparatus calculates a suppressed traffic volume of the target service according to the target value and a preset relational model | 103 |
| The calculation apparatus calculates costs of increasing the network quality indicator to the target value, and a revenue corresponding to the suppressed traffic volume | 104 |
| The calculation apparatus calculates profits according to the costs and the revenue | 105 |

FIG. 1

FIG. 2

FIG. 3

$R^2 = 0.9417718$

$Y = 0.0003125581X^2 - 0.0009723826X + 4.403$

LLC Speed (Kbps) & Per TBF PS Traffic (Kbytes)

LLC Speed (Kbps)

Per TBF PS Traffic (Kbytes)

FIG. 4

FIG. 5

# INTERNATIONAL SEARCH REPORT

| International application No. |
| --- |
| **PCT/CN2016/081663** |

## A. CLASSIFICATION OF SUBJECT MATTER

G06Q 30/02 (2012.01) i; H04W 28/02 (2009.01) i

According to International Patent Classification (IPC) or to both national classification and IPC

## B. FIELDS SEARCHED

Minimum documentation searched (classification system followed by classification symbols)

G06Q; H04W

Documentation searched other than minimum documentation to the extent that such documents are included in the fields searched

Electronic data base consulted during the international search (name of data base and, where practicable, search terms used)

WPI, EPODOC, CNPAT, CNKI, IEEE: telecom, network quality, quality of service, QoS, service, sale, relational model, cost, income, correlation, relevant, predict, ratio, fitting, network video, online video, delay, network speed, depressive, resource, bandwidth, base station, flow, 3G, 4G, 5G

## C. DOCUMENTS CONSIDERED TO BE RELEVANT

| Category* | Citation of document, with indication, where appropriate, of the relevant passages | Relevant to claim No. |
| --- | --- | --- |
| A | CN 103491556 A (HUAWEI TECHNICAL SERVICE CO., LTD.), 01 January 2014 (01.01.2014), description, paragraphs [0024]-[0038], figures 1-2 | 1-15 |
| PX | CN 105139227 A (SHANGHAI HUAWEI TECHNOLOGIES CO., LTD.), 09 December 2015 (09.12.2015), claims 1-15 | 1-15 |
| A | CN 101166342 A (BEIJING UNIVERSITY OF POSTS AND TELECOMMUNICATIONS), 23 April 2008 (23.04.2008), the whole document | 1-15 |
| A | CN 101415210 A (HUAWEI TECHNOLOGIES CO., LTD. et al.), 22 April 2009 (22.04.2009), the whole document | 1-15 |
| A | CN 103379507 A (HUAWEI TECHNOLOGIES CO., LTD.), 30 October 2013 (30.10.2013), the whole document | 1-15 |
| A | US 2012303413 A1 (VPISYSTEMS INC.), 29 November 2012 (29.11.2012), the whole document | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 July 2016 (18.07.2016) | **26 July 2016 (26.07.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**YANG, Dong**<br><br>Telephone No.: (86-10) **010-62413693** |

Form PCT/ISA/210 (second sheet) (July 2009)

## INTERNATIONAL SEARCH REPORT
### Information on patent family members

International application No.

**PCT/CN2016/081663**

| Patent Documents referred in the Report | Publication Date | Patent Family | Publication Date |
|---|---|---|---|
| CN 103491556 A | 01 January 2014 | None | |
| CN 105139227 A | 09 December 2015 | None | |
| CN 101166342 A | 23 April 2008 | None | |
| CN 101415210 A | 22 April 2009 | None | |
| CN 103379507 A | 30 October 2013 | WO 2013159551 A1 | 31 October 2013 |
| US 2012303413 A1 | 29 November 2012 | WO 2012166641 A1 | 06 December 2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201510514907